# EUROPEAN PATENT APPLICATION

(11) **EP 4 296 657 A1**
(43) Date of publication of application: **27.12.2023**
(21) Application number: 23169257.5
(22) Date of filing: 21.04.2023
(51) Int. Cl.: G01N 23/2204, G01N 23/223

(54) **SAMPLE CELL FOR FLUID SAMPLE AND X-RAY FLUORESCENCE ANALYZER AND ANALYSIS METHOD USING SAME**

(30) Priority: 22.06.2022 JP 2022100544
(71) Applicant: Hitachi High-Tech Science Corporation, Minato-ku Tokyo 105-6411 (JP)
(72) Inventor: KANAZAWA, Yuki, Tokyo, 105-6411 (JP); SATO, Tsuneo, Tokyo, 105-6411 (JP); TATSUMI, Masaki, Tokyo, 105-6411 (JP)
(74) Representative: Cabinet Chaillot

(57) **Abstract**

Disclosed is a sample cell for a fluid sample, which is used for X-ray fluorescence of fluid samples such as petroleum. With the use of the sample cell, it is possible to control the thickness of a fluid sample to be analyzed. The sample cell includes a sample cell outer frame 107 having openings at both ends, a lower window member 104 configured to close an opening of the sample cell outer frame, a sample cell inner frame 106 having narrower openings at both ends than the openings of the sample cell outer frame, and an upper window member 105 configured to close an opening of the sample cell inner frame, in which at least one of the lower window member and the upper window member is made of a material that transmits X-rays, the sample cell inner frame is inserted into the sample cell outer frame, and a gap between the lower window member and the upper window member is filled with a fluid sample 100.

## Description

### BACKGROUND OF THE INVENTION

### 1. Field of the Invention

The present invention relates to a sample cell for a fluid sample used for X-ray analysis, an X-ray fluorescence analyzer and analysis method using the same.

### 2. Description of the Related Art

There is known an X-ray fluorescence (XRF) analyzer in which fluorescent X-rays (also called secondary X-rays) generated when a sample is irradiated with primary X-rays are detected with a detector, and characterization of elements contained in the sample and calculation of the concentration of each of the elements are carried out on the basis of the spectral distribution of the detected fluorescent X-rays. Objects to be measured are not limited to solid samples but it is known that powders and fluid samples with fluidity can be measured.

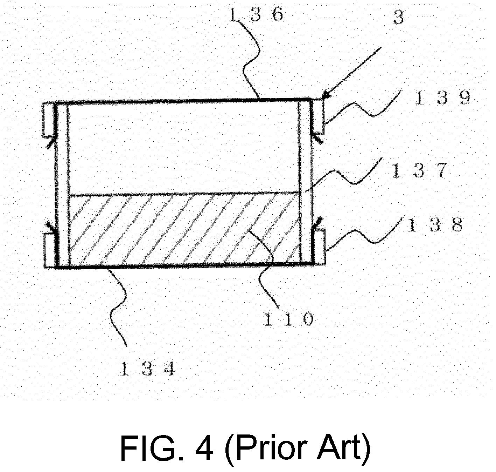

For example, a sample container 3 for an X-ray fluorescence analyzer illustrated in FIG. 4 uses a structure in which a lower window member 134 is fixed to a lower part of a sample cell case 137 by a lower window member frame 138, a fluid sample 110 is contained therein, and an upper window member 136 is fixed by an upper window member frame 139.

In connection with the sample container 3, it is known that in the case where an analyte is a fluid sample 110 such as a liquid or a powder, the fluid sample 110 is contained in a sample container 3 having a film (window member 134) that transmits X-rays as the bottom surface thereof, and the sample container 3 is placed in a measurement zone in an X-ray fluorescence analyzer. In this state, primary X-rays emitted from an X-ray tube (not illustrated) are incident onto the bottom surface of the window member 134 of the sample container 3, and fluorescent X-rays (secondary X-rays) emitted from the fluid sample 110 are detected by a detector (not illustrated) and analyzed.

In addition, there is known a sample cell for a powder sample, which is used for accurate quantitative analysis of the sample using X-ray fluorescence (XRF). With the use of this sample cell, light elements and trace amounts of powder samples can be analyzed. (Refer to Patent Literature 1)

### [Literature of Related Art]

### Patent Literature

[Patent Literature 1] Japanese Patent Application Publication No. 2021-71308

### SUMMARY OF THE INVENTION

The conventional technique described above has problems described below.

In the case of X-ray fluorescence analysis, when a sample (refer to an upper side in FIG. 4 in Patent literature 1) is thick, X-rays attributed to elements of uninterest are frequently detected, resulting in decrease in sensitivity for elements of interest or decrease in analysis accuracy due to increase in the background signal. On the other hand, when a sample is thin, there is a problem in that the sensitivity for an element of interest is insufficient. Therefore, to detect X-rays with high sensitivity for an element of interest, the thickness of a sample needs to be appropriately controlled depending on the type of the sample. For the control of the sample thickness, a method of weighing the sample with a measuring instrument has been used.

However, when the thickness of a liquid sample is as small as 1 mm or less, unevenness may occur in the thickness due to the influence of surface tension. In addition, when the liquid sample is volatile, the thickness of the liquid sample may change because the liquid sample volatilizes during measurement. For this reason, in connection with the sample container 3 for the X-ray fluorescence analyzer illustrated in FIG. 4, when the sample 110 is a fluid sample, there is a problem in that the volume of the content in the sample container 3 increases due to the generation of volatile gas, which may cause the lower window member 104 to be deformed, or a problem in that the thickness of the sample 110 cannot be controlled. Even through the sample is weighed with a metering instrument, the control of the thickness of the sample to fall within an appropriate range may fail due to the above-described problems, and thus the analysis accuracy may be reduced.

The present invention has been made in view of the above-mentioned problems and aims to provide a sample cell for a fluid sample, which can control the thickness of the fluid sample to be constant, and an X-ray fluorescence analyzer and analysis method using the sample cell.

The present invention employs a construction described below to solve the aforementioned problems. In other words, a sample cell for a fluid sample, according to a first invention, includes: a sample cell outer frame openings at both ends; a lower window member configured to close one of the openings of the sample cell outer frame; a sample cell inner frame having narrower openings at both ends than the openings of the sample cell outer frame, respectively; and a upper window member configured to close an opening of the sample cell inner frame, in which at least one of the lower window member and the upper window member is made of a material that transmits X-rays, the sample cell inner frame is inserted into the sample cell outer frame, and a gap between the lower window member and the upper window member is filled with a fluid sample.

Since the sample cell for a fluid sample is configured such that the sample cell inner frame is inserted into the sample cell outer frame, and the gap between the lower window member and the upper window member is filled with the fluid sample, the gap between the lower window member and the upper window member can be controlled according to the degree of insertion of the sample cell inner frame into the sample cell outer frame, and the thickness of the fluid sample filling the gap can be controlled. In particular, since the fluid sample completely fills the gap between the lower window member and the upper window member and thus there is no empty cavity between the lower window member and the upper window member, it is possible to inhibit the thickness of the fluid sample from being changed by surface tension.

A sample cell for a fluid sample, according to a second invention is characterized in that, in the first invention, a lower end position of the sample cell inner frame is higher than a lower end position of the sample cell outer frame, and the gap between the lower window member and the upper window member is defined by the difference in the lower end position of the sample cell outer frame and the lower end position of the sample cell inner frame.

That is, since the sample cell for a fluid sample is configured such that the gap between the lower window member and the upper window member is defined by the difference in the lower end position of the sample cell outer frame and the lower end position of the sample cell inner frame, the thickness of the fluid sample can be controlled according to the difference in the lower end position of the sample cell outer frame and the lower end position of the sample cell inner frame.

A sample cell for a fluid sample, according to a third invention is characterized in that, in the second invention, a space in communication with the gap between the lower window member and the upper window member is provided between an outer periphery of the sample cell inner frame and an inner periphery of the sample cell outer frame.

In other words, in the sample cell for a fluid sample, since the space in communication with the gap between the lower window member and the upper window member is provided between the outer periphery of the sample cell inner frame and the inner periphery of the sample cell outer frame, even though volatile gas is generated from the fluid sample filling the gap between the lower window member and the upper window member, the volatile gas can be discharged into the space. Therefore, it is possible to inhibit the volatile gas from remaining between the lower window member and the upper window member. In addition, even though the fluid sample is present in an excessive amount, since the amount (thickness) of the fluid sample filling between the lower window member and the upper window member can be transferred to the space from the gap between the lower window member and the upper window member, the amount (thickness) of the fluid sample between the lower window member and the upper window member can be maintained at a constant level.

A sample cell for a fluid sample, according to a fourth invention, is characterized in that, in the third invention, the sample cell inner frame is provided with a degassing hole.

In other words, in the sample cell for a fluid sample, since the degassing hole is provided at the top of the sample cell inner frame, the volatile gas transferred to the space can be discharged to the outside through the degassing hole.

A sample cell for a fluid sample, according to a fifth invention is characterized in that, in the fourth invention, one the lower window member and the upper window member is made of a metal material.

In other words, in the sample cell for a fluid sample, since one of the lower window member and the upper window member is made of a metal material, X-rays originating in the metal material are detected, and the detected X-rays are used to correct an X-ray intensity of an analysis target element. That is, it is possible to offset an X-ray intensity variation depending on the composition of an analysis target sample.

An X-ray fluorescence analyzer according to a sixth invention includes an X-ray tube configured to emit primary X-rays, an X-ray detector configured to detect fluorescent X-rays, and the sample cell of any of the first to fifth inventions. The X-ray tube irradiates the lower window member or the upper window member of the sample cell with the primary X-rays, and the X-ray detector detects fluorescent X-rays generated from the fluid sample.

An X-ray fluorescence analysis method according to a seventh invention includes: receiving a fluid sample inside of the sample cell outer frame of the sample cell for the fluid sample of any one of the first to fifth inventions; assembling the sample cell by inserting the sample cell inner frame into the sample cell outer frame and inserting the fluid sample into the lower window member and the upper window member; irradiating any one of the lower window member or the upper window member with primary X-rays from the X-ray tube; and detecting the X-ray fluorescent X-rays generated from the fluid sample with the X-ray detector.

According to the present inventions, the effects described below can be obtained.

That is, since the sample cell for a fluid sample, according to the present invention, is configured such that the sample cell inner frame is inserted into the sample cell outer frame, and the gap between the lower window member and the upper window member is filled with a fluid sample, the gap between the lower window member and the upper window member can be controlled according to the degree of insertion of the sample cell inner frame into the sample cell outer frame, and the thickness of the filling fluid sample can be controlled.

Therefore, according to the present invention, an X-ray fluorescence analyzer and analysis method for detecting X-rays with high sensitivity and accuracy can be realized by providing a sample cell that can accurately control the thickness of a fluid sample.

### BRIEF DESCRIPTION OF THE DRAWINGS

FIG. 1 is a cross-sectional view illustrating a bottom-up irradiation X-ray fluorescence analyzer containing a sample cell, according to a first embodiment of the present invention;
FIG. 2 is an exploded perspective view illustrating the sample cell according to the first embodiment of the present invention;
FIG. 3 is a cross-sectional view illustrating a top-down irradiation X-ray fluorescence analyzer containing a sample cell, according to a second embodiment of the present invention; and
FIG. 4 is a cross-sectional view showing a sample cell for a flow sample, used in conventional X-ray fluorescence analysis.

### DESCRIPTION OF THE PREFERRED EMBODIMENTS

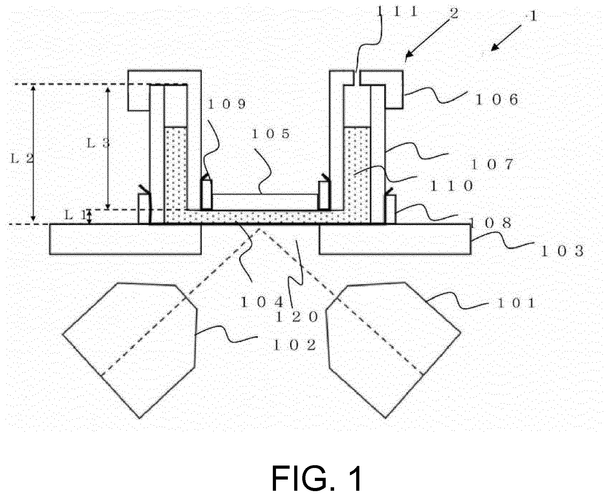

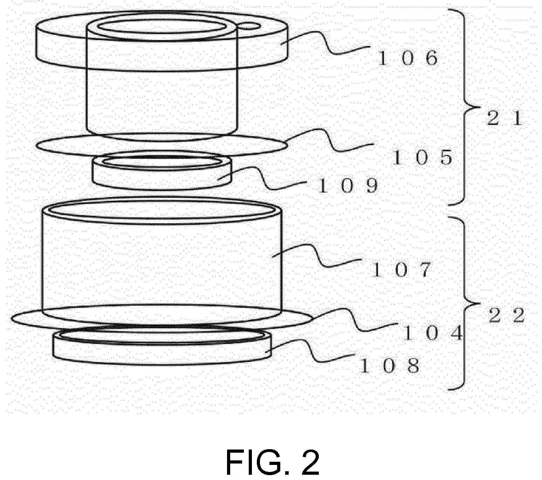

Hereinafter, a sample cell for a fluid sample, according to the present invention, and first embodiments of an X-ray fluorescence analyzer and analysis method using the sample cell will be described with reference to FIGS. 1 and 2.

FIG. 1 is a schematic view illustrating a schematic construction of a bottom-up irradiation X-ray fluorescence analyzer using a sample cell for a fluid sample, according to a first embodiment of the present invention. A sample stage 103 provided in an X-ray fluorescence analyzer 1 is planar and provided with an opening 120. A sample cell 2 containing a fluid sample 110 to be analyzed is provided on the top of the opening 120 of the sample stage 103.

The X-ray fluorescence analyzer 1 is equipped with an X-ray tube (X-ray irradiation means) 101 and an X-ray detector 102 installed at a position that is 45°-obliquely below the opening 120 on which the sample cell 2 is installed. The X-ray tube 101 directs internally generated X-rays to a predetermined irradiation zone and irradiates the bottom of the sample cell 2 containing the fluid sample 110 mounted on the sample stage 102 with primary X-rays through the opening 120. The X-ray detector 103 detects fluorescent X-rays generated from the fluid sample 110 contained in the sample cell 2 due to the incidence of the primary X-rays emitted from the X-ray tube 101, and outputs the detection results to a processor such as a personal computer (PC) (not illustrated) for analysis. As such, the opening 120 is large enough for the primary X-rays to be introduced into the bottom of the sample cell 2 and for the fluorescent X-rays to be detected.

FIG. 2 is an exploded perspective view illustrating the construction of the sample cell used in FIG. 1. The sample cell 2 is composed of a lower window member 104, an upper window member 105, a sample cell inner frame 106, a sample cell outer frame 107, a lower window member fixing member 108, and an upper window member fixing member 109.

In other words, the sample cell 2, according to a first embodiment, includes: a sample cell outer frame 107 having openings at both ends, a lower window member 104 configured to close an opening of the sample cell outer frame 107, a sample cell inner frame 106 having narrower openings that are positioned at both ends than the openings of the sample cell outer frame 107, and a upper window member 105 configured to close an opening of the sample cell inner frame 106. At least one of the lower window member 104 and the upper window member 105 is made of a material that transmits X-rays. The sample cell inner frame 106 is inserted into the sample cell outer frame 107, and a gap between the lower window member 104 and the upper window member 105 is filled with the fluid sample 110.

The sample cell inner frame 106 has a key-shaped cross-sectional structure having openings at both ends and has a cylindrical shape. The sample cell inner frame 106 is made of a plastic material such as polyethylene or a metal material. It is desirable that the inner diameter of the sample cell inner frame 106 is sufficiently larger than the irradiation zone to be irradiated with the primary X-rays. In addition, a degassing hole 11 through which gas can escape is provided at the top of the sample cell inner frame 106, thereby preventing the lower window member 104 and the upper window member 105 from bulging when gas is generated due to the volatilization of the fluid sample 110. In addition, the inner diameter of the sample cell inner frame 106 needs to be larger than the diameter of the irradiation zone of the X-rays emitted from the X-ray tube 101 and than the diameter of the detection field of view of the detector 102, and it is necessary to prevent X-rays generated from the wall surface of the sample cell inner frame 106 from being detected. In addition, the detection of X-rays generated from the wall surface may be prevented by covering the wall surface with a metal material.

The sample cell outer frame 107 has a cylindrical shape that are open at both ends thereof and is made of a plastic material such as polyethylene or a metal material. The inner diameter of the sample cell outer frame 107 is larger than the size of the opening 120.

The sample cell inner frame 106 may be inserted into the sample cell outer frame 107 so as to mate each other. A sufficient gap (space) is provided between the sample cell inner frame 106 and the sample cell outer frame 107 when the sample cell inner frame 106 and the sample cell outer frame 107 are mated.

The upper window member 105 is a sheet-shaped member with a sufficiently large area that may go beyond the outer diameter of the sample cell inner frame 106, and the lower window member 104 is a sheet-shaped member with a sufficiently large area that may go beyond the outer diameter of the sample cell outer frame 110. In addition, the upper window member 105 and the lower window member 104 are made of a material that does not allow the transmission of the fluid sample 110, which is a liquid or powder, but allows the transmission of X-rays. The lower window member 104 forms the bottom surface of the sample cell 2 in which the fluid sample 110 is received.

Note that in this case, the upper window member 105 does not necessarily need to be made of a material which mostly transmits X-rays. The upper window member 105 may be made of a metal material. The X-rays emitted from the metal material may be detected by the X-ray detector 102, and the detected X-rays originating in the metal material may be used to correct the X-ray intensity of an analysis target element. That is, it is possible to offset an X-ray intensity variation depending on the composition of an analysis target sample. The metal material may be applied on the upper window member 105 or may be deposited on the upper window member 105.

The lower window member fixing member 108 has a cylindrical ring shape and is made of a plastic material such as polyethylene or a metal material. The lower window member 104 is pinched and fixed between an inner portion of the lower window member fixing member 108 and an outer portion of the sample cell outer frame 110.

The upper window member fixing member 109 has a cylindrical ring shape and is made of a plastic material such as polyethylene or a metal material. The upper window member 105 is pinched and fixed between an outer portion of the upper window member fixing member 109 and an outer portion of the sample cell inner frame 106.

The upper window member fixing member 109 may be fitted into a lower portion of the sample cell inner frame 106, and the lower window member fixing member 108 may be fitted into a lower portion of the sample cell outer frame 107. The lower window member 104 and the upper window member 105 are fixed in a manner that the lower window member 104 is pinched between the sample cell outer frame 107 and the lower window member fixing member 108, and the upper window member 105 is pinched between the sample cell inner frame 106 and the upper window member fixing member 109.

When the fluid sample 110 is liquid, it is desirable that the gap (space) provided between the sample cell inner frame 106 and the sample cell outer frame 107 is sufficiently large so that air bubbles are not introduced into the gap when the sample cell 2 is assembled and are not preserved between the lower window member 104 and the upper window member 105.

Next, an X-ray fluorescence analysis method using the sample cell 2 for a fluid cell according the present invention will be described with reference to FIGS. 1 and 2.

First, the procedure for assembling a sample cell 2 for a fluid sample and receiving a fluid sample 110 inside the sample cell 2 will be described below.

A sample cell lower part 22 is assembled with the use of a lower window member fixing member 108, a sample cell outer frame 107, and a lower window member 104.

The lower window member fixing member 108 is placed on a flat surface (not illustrated), the lower window member 104 is placed on an upper surface of the lower window member fixing member 108, and the sample cell outer frame 107 is inserted into the lower window member fixing member 108 so that the lower window member 104 can be fixed. In this case, note that the lower window member 104 must not be loosened in a position where the lower windows member 104 comes into contact with the inner surface of the sample cell outer frame 107.

Likewise, a sample cell upper part 21 is assembled with the use of an upper window member fixing member 109, a sample cell inner frame 106, and an upper window member 105.

The sample cell inner frame 106 is placed on a flat surface (not illustrated), the upper window member 105 is inserted into the inside of the cylindrical sample cell inner frame 106, and the upper window member fixing member 109 is fitted to fix the upper window member 105. In this case, note that the upper window member 105 must not be loosened in a position where the upper windows member 105 comes into contact with the inner surface of the sample cell inner frame 106.

Next, a fluid sample 110 that is liquid or powdery is introduced into the inside of the sample cell outer frame 107 to which the lower window member 104 of the sample cell upper part 21 is fixed.

In addition, the assembled sample cell lower part 22 is inserted into the sample cell upper part 21, so that the fluid sample cell 2 is completely assembled.

The assembled sample cell 2 for a fluid sample is placed on a sample stage 102, the lower window member 104 of the sample cell 2 is irradiated with primary X-rays emitted from the X-ray tube 1, the generated fluorescent X-rays are detected by the X-ray detector, and the detection results are output to a processor such as a personal computer (PC)(not illustrated) for X-ray fluorescence analysis.

In this case, an excess of the fluid sample 10, which cannot fit into the gap between the lower window member 104 and the upper window member 105, is preserved in the gap (space) between the sample cell inner frame 106 and the sample cell outer frame 107.

An appropriate thickness L1 of the sample is determined by the difference in the height L2 of the sample cell outer frame 107 (the height L2 being a distance from the upper end to the lower end of the sample cell outer frame 107) and the height L3 of the sample cell inner frame 106 (the height L3 being a distance from the upper end of the sample cell outer frame 107 to the lower end of the sample cell inner frame 106).

That is, the position of the lower end of the sample cell inner frame 106 is higher than the position of the lower end of the sample cell outer frame 107, and the gap between the lower window member 104 and the upper window member 105 is defined by the difference in the lower end position of the sample cell outer frame 107 and the lower end position of the sample cell inner frame 106.

For example, when the fluid sample 110 is petroleum and a substance contained in the petroleum to be analyzed is a light element, the thickness L1 is set to be in the range of from 300 µm to 1 mm. In this case, to reduce a measurement error, it is preferable that the difference in height of the sample cell inner frame and the sample cell outer frame is 100 µm or less.

Note that in the procedure for assembling the sample cell lower part 22 of the sample cell 2 described above, the procedure is carried out on a flat surface (not illustrated), but the procedure may be carried out on the sample stage 103.

In addition, the upper window member 105 and the lower window member 104 may be directly fixed to the bottom surface of the sample cell inner frame 106 and the bottom surface of the sample cell outer frame 107, respectively with an adhesive or by hot welding rather than by the upper window member fixing member 109 and the lower window member fixing member 108, respectively. In the case of adhesive fixing, the adhesive is applied only to the bottom surface of the sample cell inner frame 106 and the bottom surface of the sample cell outer frame 107 so that no adhesive is applied to the X-ray irradiation zone. In addition, in the case of hot welding fixing, the sample cell inner frame 106 and the sample cell outer frame 107 must be made of the same material as the lower window member 104 and the upper window member 105.

In addition, the upper window member 105 is preferably made of a material that transmits X-rays. Alternatively, the upper window member 105 may be made of metal, plastic, or the like. In this case, depending on the measurement conditions, the material is selected depending on the thickness L1 of the fluid sample 110 so that fluorescent X-rays originating in the upper window material 105 will not be detected.

For example, when the fluid sample 110 to be analyzed is petroleum having a thickness L1 of 500 µm, the upper window member 105 is made of aluminum. In this case, fluorescent X-rays serving as noise and originating in aluminum are absorbed by the fluid sample 110 and thus are not detected by the detector.

As described above, the sample cell 2 for a fluid sample, according to the present embodiment, is configured such that the sample cell inner frame 106 is inserted into the sample cell outer frame 107, and the gap between the lower window member 104 and the upper window member 105 is filled with the fluid sample 110. Therefore, the gap between the lower window member 104 and the upper window member 105 can be controlled according to the degree of insertion of the sample cell inner frame 106 into the sample cell outer frame 107, and the thickness of the fluid sample 110 filling the gap can be controlled to be constant. In particular, since the gap between the lower window member 104 and the upper window member 105 is filled with the fluid sample 110, no empty cavity is present between the lower window member 104 and the upper window member 105. Therefore, it is possible to inhibit the thickness of the fluid sample 110 from being changed due to surface tension.

In addition, since the gap between the lower window member 104 and the upper window member 105 is defined by the difference in the lower end position of the sample cell outer frame 107 and the lower end position of the sample cell inner frame 106, the thickness of the fluid sample 110 can be controlled according to the difference in the lower end position of the sample cell outer frame 107 and the lower end position of the sample cell inner frame 106.

In addition, since the space in communication with the gap between the lower window member 104 and the upper window member 105 is provided between the outer periphery of the sample cell inner frame 106 and the inner periphery of the sample cell outer frame 107, even though volatile gas is generated from the fluid sample 110 filling the gap between the lower window member 104 and the upper window member 105, the volatile gas can be discharged into the space. Therefore, it is possible to inhibit the volatile gas from remaining between the lower window member 104 and the upper window member 105. In addition, even though the fluid sample 110 is present in an excessive amount, since the excessive amount of the fluid sample 110 filling the gap between the lower window member 104 and the upper window member 105 can be transferred to the space from the gap between the lower window member 104 and the upper window member 105, the filling amount (thickness) of the fluid sample 110 between the lower window member 104 and the upper window member 105 can be maintained at a constant level.

In addition, since the degassing hole 111 is provided at the top of the sample cell inner frame 106, the volatile gas transferred to the space can be discharged to the outside through the degassing hole.

In addition, since one of the lower window member 104 and the upper window member 105 is made of a metal material, X-rays originating in the metal material are detected, and the detected X-rays are used to correct an X-ray intensity of an analysis target element. That is, it is possible to offset an X-ray intensity variation depending on the composition of an analysis target sample.

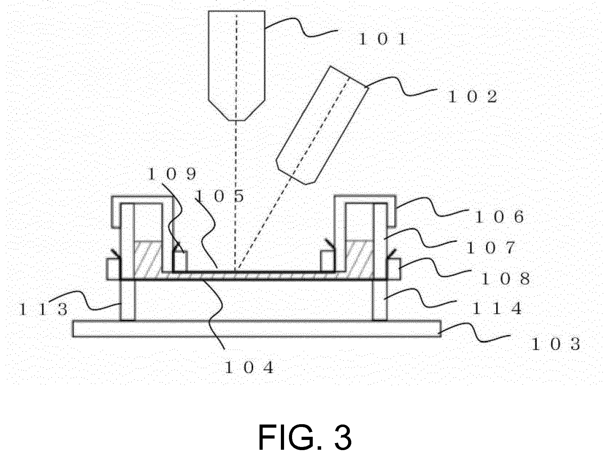

Next, a sample cell for a fluid sample according to the present invention, and second embodiments of an X-ray fluorescence analyzer and analysis method using the same sample cell will be described with reference to FIG. 3. In addition, in the following description about each of the embodiments, the same constituent elements as those described in the first embodiment are denoted by the same reference numerals, the description thereof will be omitted here.

In the first embodiment, a bottom-up irradiation X-ray fluorescence analyzer is used as illustrated in FIG. 1. However, in the second embodiment, as illustrated in FIG. 3, a top-down irradiation X-ray fluorescence analyzer is used in which an X-ray tube 101 and an X-ray detector 102 are mounted over the upper surface of an upper window member of a sample cell 2. In the second embodiment, at least the upper window member 105 is made of a material that transmits X-rays.

FIG. 3 is a schematic view illustrating a schematic construction of the X-ray fluorescence analyzer according to the second embodiment. Since the sample cell 2 in the second embodiment is constructed in the same manner as in the first embodiment, a description thereof will be omitted here.

In the present embodiment, since a sample stage 103 does not have an opening 120, a cylindrical support stand 113 is provided on the upper surface of the sample stage 103 to prevent fluorescent X-rays generated due to the incidence of primary X-rays transmitted through the lower window member 104 of the sample cell 2 onto the sample stage 103 from being detected by the X-ray detector 102. The sample cell 2 for a fluid sample is mounted on the upper surface of the cylindrical support stand 113. The support stand 113 has a sufficiently large height so that fluorescent X-rays generated at the sample stage 103 cannot be detected.

Note that in the case where the sample stage 103 has an opening 120, there is no need to install the support stand 113.

In addition, when the lower window material 104 and/or the upper window material 105 is made of a material that transmits X-rays, the material may be selected from organic compounds such as polypropylene, polyethylene terephthalate, polyimide, beryllium (Be), silicon (Si)-based compounds, carbon (C)-based compounds, and the like are used.

Note that the technical scope of the present invention is not limited to the above-described embodiments, and various changes can be made without departing from the scope of the spirit of the present invention.

### [List of Reference Numerals]

1: X-ray fluorescence analyzer
2: sample cell
21: sample cell upper part
22: sample cell lower part
101: X-ray tube
102: X-ray detector
103: sample stage
104: lower window member
105: upper window member
106: sample cell inner frame
107: sample cell outer frame
108: lower window member fixing member
109: upper window member fixing member
110: fluid sample
111: degassing hole
120: opening

## Claims

1. A sample cell (2) for a fluid sample (110), the sample cell (2), **characterized by** comprising:
a sample cell outer frame (107) having openings at both ends;
a lower window member (104) configured to close one opening of the sample cell outer frame (107);
a sample cell inner frame (106) having narrower openings at both ends than the openings of the sample cell outer frame (107); and
an upper window member (105) configured to close one opening of the sample cell inner frame (106),
wherein at least one of the lower window member (104) and the upper window member (105) is made of material that transmits X-rays,
the sample cell inner frame (106) is inserted into the sample cell outer frame (107), and
a gap between the lower window member (104) and the upper window member (105) is filled with a fluid sample.

2. The sample cell (2) for a fluid sample (110) of claim 1, wherein a lower end position of the sample cell inner frame (106) is higher than a lower end position of the sample cell outer frame (107), and a gap between the lower window member (104) and the upper window member (105) is defined by a difference in the lower end position of the sample cell outer frame (107) and the lower end position of the sample cell inner frame (106).

3. The sample cell (2) for a fluid sample (110) of claim 2, wherein a space in communication with the gap between the lower window member (104) and the upper window member (105) is provided between an outer periphery of the sample cell inner frame (106) and an inner periphery of the sample cell outer frame (107).

4. The sample cell (2) for a fluid sample (110)_of claim 3, wherein the sample cell inner frame (106) is provided with a degassing hole (111).

5. The sample cell for a fluid sample of any one of claims 1 to 4, wherein one of the lower window member (104) and the upper window member (105) is made of a metal material.

6. An X-ray fluorescence analyzer (1) comprising:
an x-ray tube (101) configured to irradiate with primary x-rays; and
an X-ray detector (102) configured to detect fluorescent X-rays; **characterized by** further comprising
the sample cell (2) for the fluid sample (110) of any one of claims 1 to 5,
wherein the X-ray tube (101) irradiates the lower window member (104) or the upper window member (105) of the sample cell (2) with the primary X-rays, and the X-ray detector (102) detects fluorescent X-rays generated from the fluid sample (110).

7. An X-ray fluorescence analysis method, **characterized by** comprising:
receiving a fluid sample (110) inside of the sample cell outer frame (107) of the sample cell (2) for the fluid sample (110) of any one of claims 1 to 5,
assembling the sample cell (2) for the fluid sample (110) by inserting the sample cell inner frame (106) into the sample cell outer frame (107) and inserting the fluid sample (110) into the lower window member (104) and the upper window member (105),
irradiating any one of the lower window member (104) or the upper window member (105) with the primary X-rays from the X-ray tube (101) and
detecting fluorescent X-rays generated from the fluid sample (110) with the X-ray detector (102).
